Europäisches Patentamt

European Patent Office

Office européen des brevets

(11) Numéro de publication: **0 006 185**
A1

# (12) DEMANDE DE BREVET EUROPEEN

(21) Numéro de dépôt: 79101796.5

(22) Date de dépôt: 07.06.79

(51) Int. Cl.³: **B 29 F 3/08,** B 29 D 7/24

(30) Priorité: 12.06.78 FR 7817541

(43) Date de publication de la demande: 09.01.80
Bulletin 80/1

(84) Etats contractants désignés: AT CH DE GB IT

(71) Demandeur: **Société dite : PONT-A-MOUSSON S.A.,
91, Avenue de la Libération - 4 X -, F-54017 Nancy
Cedex (FR)**

(72) Inventeur: **Sergent, Jean Philippe, 30 rue des Hêtres,
F-76600 Le Havre (FR)**

(74) Mandataire: **Guy, Claude et al, c/o Centre de
Recherches de Pont-à-Mousson BP 28, F-54700 Pont-
a-Mousson (FR)**

(54) **Dispositif de refroidissement, notamment pour le refroidissement extérieur de gaines tubulaires en matière plastique obtenues par extrusion-soufflage.**

(57)  Ce dispositif est du type comprenant un anneau de refroidissement délimitant deux chambres abbulaires qui présentent
respectivement deux fentes annulaires coaxiales de sortie et
dont l'une est reliée à une source d'air de refroidissement.

Suivant l'invention, l'anneau de refroidissement (10) comporte des moyens réglables (36–39) de mise en communication
des deux chambres (15–30) entre elles. On peut ainsi faire
varier les conditions de refroidissement de la gaine sans modifier le débit total d'air de refroidissement.

1

"Dispositif de refroidissement, notamment pour le
refroidissement extérieur de gaines tubulaires en
matière plastique obtenues par extrusion-soufflage."

La présente invention est relative à un dispositif de refroidissement destiné notamment au refroidissement extérieur de gaînes tubulaires en matière plastique obtenues par soufflage interne d'une paraison tubulaire extrudée . De telles gaînes servent à fabriquer par exemple des sacs souples en matière plastique.

Lors de la fabrication de gaînes tubulaires par extrusion et soufflage, il est nécessaire de refroidir rapidement la matière sortant à l'état chaud de la filière annulaire de l'extrudeuse, pour assurer ainsi la solidification de cette matière. Généralement, on effectue ce refroidissement par soufflage d'air froid à la périphérie de la gaîne, à la sortie de la filière de l'extrudeuse, à l'aide d'un anneau de refroidissement. Cet anneau de refroidissement comprend généralement une chambre annulaire reliée à une source d'air de refroidissement et débouchant au voisinage de l'ajutage de la tête d'extrusion par une fente radiale annulaire coaxiale à cet ajutage.

Dans certains cas, pour améliorer le refroi - dissement, l'anneau de refroidissement comporte deux fentes de soufflage superposées reliées respectivement à deux chambres annulaires. Dans les anneaux de refroidissement connus de ce type, les deux chambres sont alimentées séparément en air de refroidissement, chacune à partir d'une source d'air comprimé. Ces dispositifs sont donc relativement compliqués et coûteux. De plus, le réglage du débit dans une des fentes provoque une modification du débit total d'air de refroidissement; par conséquent, si l'on veut éviter une modification de la forme de la gaine, il faut faire varier l'ouverture du diaphragme prévu sur l'anneau et destiné à régler le débit de fuite le long de la gaine.

2

La présente invention a pour but de remédier à ces inconvénients au moyen d'un dispositif de refroidissement à deux chambres de structure très simple. A cet effet, elle a pour objet un dispositif de refroidissement du type comprenant un anneau de refroidissement délimitant deux chambres annulaires qui présentent respectivement deux fentes annulaires coaxiales de sortie et dont l'une est reliée à une source d'air de refroidissement , caractérisé en ce que l'anneau de refroidissement comporte des moyens réglables de mise en communication des deux chambres entre elles.

Grâce à cet agencement, il est inutile d'avoir un dispositif d'amenée d'air pour chaque chambre annulaire puisqu'une chambre, reliée à la source d'air comprimée, assure l'alimentation de l'autre; d'autre part, le réglage du débit d'air traversant les moyens de mise en communication permet de faire varier le débit d'air de refroidissement dans chaque chambre sans que le débit total d'air soit modifié.

Dans un mode de réalisation particulièrement simple, les deux chambres annulaires comportent une paroi commune perforée sur laquelle peut coulisser une plaque perforée pouvant à volonté masquer ou découvrir plus ou moins les perforations de ladite paroi, le mouvement de cette plaque perforée étant commandé par un bras de manoeuvre qui traverse une boutonnière d'une paroi fixe de l'anneau.

D'autres caractéristiques et avantages apparaîtront au cours de la description qui va suivre.

Aux dessins annexés, donnés uniquement à titre d'exemple :

la Fig. 1 est une vue schématique en coupe longitudinale, à petite échelle, d'une installation de formage de gaînes tubulaires en matière plastique par extrusion-soufflage munie d'un dispositif de refroidissement conforme à l'invention;

la Fig. 2 est une vue schématique partielle, à plus grande échelle, prise en coupe transversale selon la ligne 2-2 de la Fig. 3, du dispositif de refroidissement de l'installation de la Fig. 1;

3

la Fig. 3 est une vue schématique prise en coupe selon la ligne 3-3 de la Fig. 2, et à la même échelle.

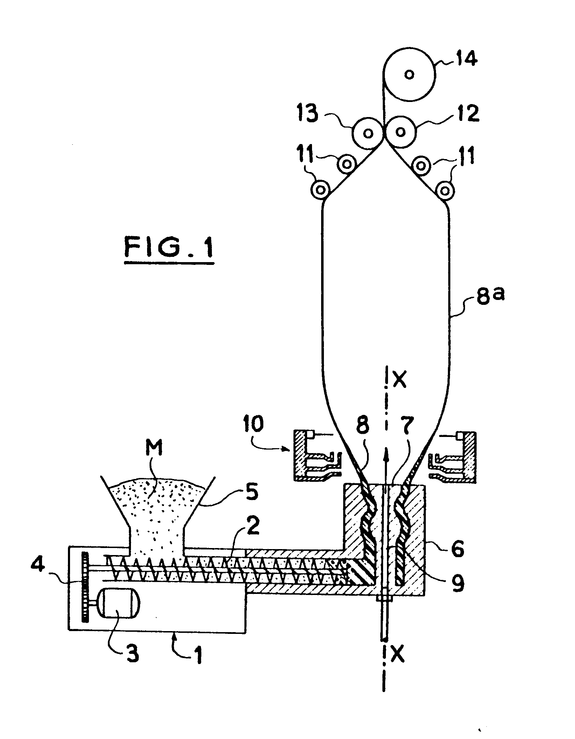

L'installation de la Fig. 1,destinée au formage de gaines tubulaires en matière plastique par extrusion-soufflage,se compose pour l'essentiel d'une extrudeuse 1 à vis 2 actionnée par un moteur 3 qui est relié à cette vis 2 par des organes de transmission 4 constitués par exemple par un engrenage réducteur. La matière plastique M est stockée sous forme de poudre ou de granulats dans une trémie 5 alimentant la vis 2, qui la conduit dans une tête d'extrusion 6 présentant une filière 7 à axe X-X vertical d'où sort vers le haut une paraison annulaire 8; un conduit 9 traversant cette filière 7 suivant son axe amène un gaz sous pression s'écoulant vers le haut et servant à l'expansion radiale de la paraison 8 en une bulle ou gaîne 8$^a$. Un dispositif de refroidissement extérieur 10 en forme d'anneau entoure la gaine 8$^a$ immédiatement à sa sortie de la filière 7. L'installation comporte également, à une certaine hauteur au-dessus du dispositif 10, des moyens d'écrasement de la gaine 8$^a$. Ces moyens sont par exemple constitués par des rouleaux de guidage 11 et des rouleaux pinceurs 12-13, disposés de manière à assurer un aplatissement progressif de la gaine 8$^a$ puis un enroulement de la gaine aplatie ainsi obtenue sur un cylindre récepteur 14.

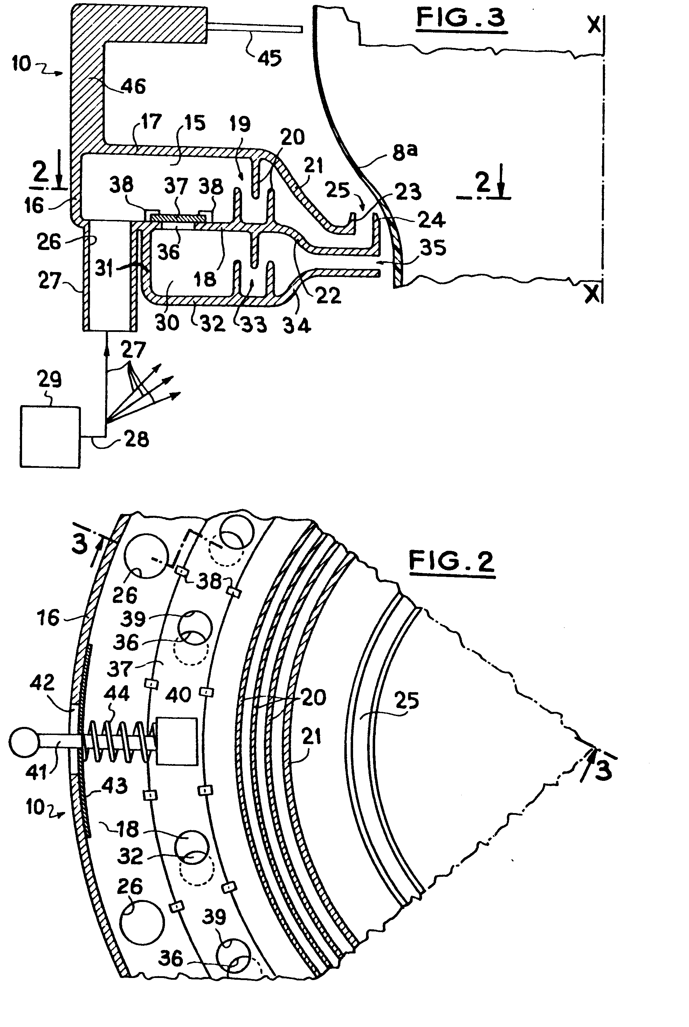

Le dispositif de refroidissement 10 est représenté plus en détail aux Fig. 2 et 3 et comporte deux chambres annulaires d'axe X-X.

La première chambre ou chambre supérieure 15 est délimitée par une paroi extérieure cylindrique 16 d'axe X-X, deux parois horizontales supérieure 17 et inférieure 18, et une chicane intérieure 19 constituée d'une série d'ailettes annulaires 20, au nombre de trois dans l'exemple représenté, s'étendant verticalement à partir des parois 17 et 18 alternativement,sur un peu plus de la moitié de la hauteur de la chambre 15. Ces parois 17 et 18 se prolongent vers l'axe X-X par deux parois 21, 22 qui descendent en convergeant l'une vers l'autre puis s'étendent horizontalement pour se terminer par des rebords verticaux 23, 24 délimitant entre eux une fente annulaire 25 d'axe X-X pour la sortie d'air vers le haut.

4

La périphérie de la paroi 18 est percée d'une série de trous identiques 26 régulièrement espacés . Tous les trous 26 sont reliés par des conduits 27 à un collecteur commun 28 d'alimentation en air comprimé à partir d'un ventilateur unique 29.

La deuxième chambre ou chambre inférieure 30 est délimitée extérieurement par une paroi cylindrique extérieure 31 d'axe X-X qui se raccorde à la paroi 18 au voisinage de l'extrémité radialement interne des trous 26, supérieurement par la paroi 18, inférieurement par une paroi horizontale 32 et intérieurement par une chicane 33 analogue à la chicane 19 et disposée au-dessous de celle-ci. Cette chambre 30 se prolonge vers l'axe X-X par un ajutage annulaire rétréci délimité supérieurement par la paroi 22 et inférieurement par une paroi 34 qui comprend une partie montante d'axe X-X et une partie horizontale s'étendant jusqu'au rebord 24. Cet ajutage débouche donc radialement et horizontalement vers l'axe X-X par une fente annulaire 35.

La paroi 18 est munie entre la paroi 31 et la chicane 19 d'une série de perforations circulaires 36 identiques et régulièrement réparties, destinées à mettre en communication les deux chambres 15 et 30. Une plaque annulaire 37 recouvre la zone des perforations 36 et est maintenue appliquée à coulissement circonférentiel mais sans jeu contre la face supérieure de la paroi 18 par deux séries de pattes recourbées ou crochets 38. Cette plaque 37 présente autant de trous 39 qu'il y a de perforations 36, de même diamètre que celles-ci et réparties circonférentiellement de la même façon.

A l'emplacement d'un trou 39 est fixé, par exemple soudé, sur la plaque 37 un plot 40 portant un bras 41 dirigé radialement vers l'extérieur. Ce bras 41 traverse sans jeu vertical important une boutonnière horizontale oblongue 42 prévue dans la paroi 16 et traverse sans jeu une plaquette incurvée 43. Celle-ci est maintenue en permanence appliquée de façon à peu près étanche contre la face interne de la paroi 16 par un ressort hélicoïdal 44 comprimé entre elle -même et le plot 40. La longueur de la boutonnière 42 est telle que, dans une position limite du bras 41, les trous 36 et 39 soient en exacte coïncidence et, dans l'autre, la plaque 37 obture complètement par

0006185

5

ses parties pleines les perforations 36 de façon à peu près étanche. Bien entendu, les pattes 38 sont suffisamment espacées pour permettre cette course du bras 41.

Le dispositif de refroidissement 10 comporte également au-dessus de la chambre 15 un diaphragme à iris horizontal 45, d'ouverture réglable, porté à sa périphérie extérieure par une jupe annulaire 46 d'axe X-X qui part du pourtour extérieur de la paroi 17. Ce diaphragme 45 a été représenté de façon seulement schématique sur les Fig. 1 et 3.

Le fonctionnement du dispositif de refroidissement 10 est le suivant :

Lorsque la paraison 8 sort de la filière 7 de l'extrudeuse, elle est gonflée par le gaz soufflé par le conduit 9 et tend alors à se dilater en augmentant de diamètre. Lorsque le bras 41 est en position telle que les orifices 36 et 39 coïncident, l'air de refroidissement introduit dans la chamre 15 par le ventilateur 29, le collecteur 28 et les conduits 27 peut traverser la plaque 37 et la paroi 18 séparant les deux chambres, de sorte qu'après avoir traversé les chicanes 19 et 33, qui en assurent une répartition circonférentielle régulière, l'air de refroidissement est soufflé sur la gaîne $8^a$ par les fentes 25 et 35. Sous l'effet de cet air, la gaîne $8^a$ extrudée et gonflée tend à se refroidir. Le diaphragme à iris 45 assure le réglage de la dimension extérieure de la gaîne $8^a$ que l'on désire, tout en permettant le passage de l'air de refroidissement entre cette dernière et sa périphérie intérieure circulaire.

Le jet d'air de refroidissement apporté par la fente inférieure 35, perpendiculaire à l'axe X-X de la gaine, provoque un refroidissement partiel de la peau externe de la paraison 8 en conférant à celle-ci une tenue correcte tout en lui laissant assez de malléabilité pour permettre son étirage et son gonflage. Le jet d'air de refroidissement apporté par la fente 25, qui est parallèle à l'axe X-X mais qui peut, en variante, être oblique, assure un refroidissement plus complet.

Ainsi, lorsque la quantité d'air nécessaire au refroidissement correct est obtenue par réglage du débit du ventilateur 29, celui-ci n'a plus à être modifié même si l'on doit modifier la quantité d'air passant par 1 une ou l'autre des

6

fentes 25 ou 35. En effet, on peut modifier la répartition des flux d'air entre ces deux fentes, en déplaçant la plaque 37 à l'aide du bras 41 par rapport à la paroi fixe 18, sans modifier le flux total d'air de refroidissement passant entre la gaîne 8$^a$ et le diaphragme 45. Ainsi, on peut diminuer jusqu'à l'annuler la quantité d'air soufflée par la fente 35 en diminuant la section d'entrée de cet air dans la chambre inférieure 30, en augmentant simultanément la quantité d'air soufflée par la fente supérieure 25. Le refroidissement global est donc maintenu constant tout en permettant de placer la gaîne 8$^a$ dans les conditions optimales de formage.

La commande de la rotation de la plaque mobile 37 par le bras 41 ne crée pas de fuite puisque la plaque d'étanchéité 43, maintenue appliquée sur la paroi circonférentielle 16 de la chambre 15, assure la fermeture quasi-totale de la boutonnière 42 de cette paroi, quelle que soit la position du bras 41.

Grâce à l'invention, on dispose donc d'un dispositif de refroidissement 10 simple et peu coûteux, facilement réglable , qui conserve l'avantage principal des anneaux à deux fentes, c'est-à-dire une grande capacité de refroidissement.

Des variantes de l'invention consisteraient à placer les arrivées de l'air de refroidissement dans la deuxième chambre annulaire 30, ou encore à faire traverser au bras 41 cette deuxième chambre 30. Il pourrait d'ailleurs être prévu plusieurs bras 41, répartis sur la périphérie du dispositif 10.

Il serait également possible de remplacer le dispositif simple 37-41 de mise en communication par un dispositif formé de plusieurs clapets, éventuellement à commande unique; un tel dispositif serait toutefois beaucoup plus complexe et coûteux.

Dans l'exemple décrit, la filière 7 et le dispositif de refroidissement 10 sont fixes; cependant, il est possible de prévoir, à la manière connue, que l'un ou l'autre de ces éléments soient entraînés en rotation autour de l'axe X-X. Dans ce cas, l'alimentation de la chambre 15 en air de refroidissement peut être réalisée à l'aide d'un joint tournant.

7

Bien entendu, le dispositif 10 peut être raccordé, si nécessaire, à une source d'un gaz de refroidissement autre que l'air, remplaçant le ventilateur 29.

0006185

8

- REVENDICATIONS -

1.- Dispositif de refroidissement, destiné notamment au refroidissement extérieur de gaînes tubulaires en matière plastique obtenues par soufflage interne d'une paraison tubulaire extrudée, du type comprenant un anneau de refroidissement délimitant deux chambres annulaires qui présentent respectivement deux fentes annulaires coaxiales de sortie et dont l'une est reliée à une source d'air de refroidissement , caractérisé en ce que l'anneau de refroidissement (10) comporte des moyens réglables (36-39) de mise en communication des deux chambres (15-30) entre elles.

2.- Dispositif suivant la revendication 1, caractérisé en ce que les deux chambres annulaires (15-30) comportent une paroi commune perforée (18) sur laquelle peut coulisser une plaque perforée (37) pouvant à volonté masquer ou découvrir plus ou moins les perforations de ladite paroi (18).

3.- Dispositif suivant la revendication 2, caractérisé en ce que ladite paroi (18) présente une série de perforations (36) disposées sur une circonférence, la plaque (37) présentant une série de perforations correspondantes (39) et étant mobile dans le sens circonférentiel.

4.- Dispositif suivant la revendication 3, caractérisé en ce que sur la plaque (37) est fixée une extrémité d'un bras de manoeuvre (41) qui traverse une boutonnière (42) d'une paroi fixe (16) de l'anneau (10).

5.- Dispositif suivant la revendication 4, caractérisé en ce qu'une plaquette d'étanchéité (43) traversée à joint étanche par le bras (41) est maintenue appliquée par un ressort (44) contre la face intérieure de ladite paroi fixe (16).

6.- Dispositif suivant l'une quelconque des revendications 1 à 5, caractérisé en ce que l'ensemble du dispositif est relié à un ventilateur unique (29) par une série de conduits (27) débouchant à la périphérie d'une (15) des deux chambres (15-30).

7.- Dispositif suivant l'une quelconque des revendications 1 à 6, caractérisé en ce qu'une (25) des deux fentes annulaires (25-35) débouche parallèlement ou obliquement par rapport à l'axe (X-X) de l'anneau (10),l'autre (35) débouchant radialement sur cet axe.

FIG.1

0006185

FIG.3

FIG.2

| | **DOCUMENTS CONSIDERES COMME PERTINENTS** | | **CLASSEMENT DE LA DEMANDE (Int. Cl.²)** |
|---|---|---|---|
| Catégorie | Citation du document avec indication, en cas de besoin, des parties pertinentes | Revendica-tion concernée | |
| A | <u>FR – A – 2 005 712</u> (MITSUBISHI) <br> * figures 1–8 * <br> — | | B 29 F 3/08 <br> B 29 D 7/24 |
| A | <u>FR – A – 1 556 711</u> (MITSUBISHI) <br> * figures 4–5 * <br> — | | |
| A | <u>US – A – 3 548 042</u> (REYNOLDS METALS) <br> * ensemble du brevet * <br> — | | |
| A | <u>DE – B – 1 215 906</u> (MÜLLER) <br> * figure 2 * <br> ——— | | **DOMAINES TECHNIQUES RECHERCHES (Int. Cl.²)** <br><br> B 29 F <br> B 29 D |

| | **CATEGORIE DES DOCUMENTS CITES** |
|---|---|
| | X: particulièrement pertinent |
| | A: arrière-plan technologique |
| | O: divulgation non-écrite |
| | P: document intercalaire |
| | T: théorie ou principe à la base de l'invention |
| | E: demande faisant interférence |
| | D: document cité dans la demande |
| | L: document cité pour d'autres raisons |
| | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 6–08–1979 | KUSARDY |

OEB Form 1503.1 06.78